Europäisches Patentamt

European Patent Office

Office européen des brevets

(19)

(11) Publication number: **0 264 276**
**A2**

(12) **EUROPEAN PATENT APPLICATION**

(21) Application number: **87309099.7**

(22) Date of filing: **14.10.87**

(51) Int. Cl.⁴: **F 16 F 1/12**
**F 16 F 3/10**

(30) Priority: **15.10.86 GB 8624672**

(43) Date of publication of application:
**20.04.88  Bulletin  88/16**

(84) Designated Contracting States: **DE ES FR GB NL**

(71) Applicant: **W. Christie & Grey Limited**
**Universal House Morley Road**
**Tonbridge Kent TN9 1RA  (GB)**

(72) Inventor: **Keywood, George Eric**
**July Cottage 194 Bullen Lane**
**East Peckham Tonbridge Kent TN12 5LU  (GB)**

(74) Representative: **van Berlyn, Ronald Gilbert**
**23, Centre Heights**
**London, NW3 6JG  (GB)**

(54) Vibration and/or noise isolating device.

㊼ A vibration and/or noise isolating device comprising a helical spring provided at one (generally upper) end with means for engaging or receiving a member to be supported in a substantially vibration/noise isolated manner, the spring being mounted at its other (generally lower) end by way of an elastomeric expanding insert which engages at least part of an endmost convolution of the spring generally radially from the interior of the spring, the elastomeric insert being expanded into retaining engagement with the spring by means of a metal or plastics expanding member disposed concentrically with the expanding insert and shaped at its periphery in such a manner as to impart an expanding force to the insert when moved axially towards the support platform on tightening of an assembly screw which is in screw-threaded engagement with a bore of the expanding member, the assembly screw extending into the expanding member from the side of the mounting member remote from said endmost convolution.

EP 0 264 276 A2

## Description

VIBRATION AND/OR NOISE ISOLATING DEVICE

The invention relates to a vibration and/or noise isolating device.

Vibration/noise isolating devices are known, which comprise one or more helical steel springs mounted by one end at a support platform and engagable or fixable at the other end with a member to be supported. In order for such isolating devices to operate efficiently, it is desirable that there is no metallic continuity between the spring and the supported equipment or the support platform.

The present invention consists in a vibration and/or noise isolating device comprising a helical spring provided at one (generally upper) end with means for engaging or receiving a member to be supported in a substantially vibration/noise isolated manner, the spring being mounted at its other (generally lower) end by way of an elastomeric expanding insert which engages at least part of an endmost convolution of the spring generally radially from the interior of the spring, the elastomeric insert being expanded into retaining engagement with the spring by means of a metal or plastics expanding member disposed concentrically with the expanding insert and shaped at its periphery in such a manner as to impart an expanding force to the insert when moved axially towards the support platform on tightening of an assembly screw which is in screw-threaded engagement with a bore of the expanding member, the assembly screw extending into the expanding member from the side of the mounting member remote from said endmost convolution.

There may be a single assembly screw, in which case the bore may be at the axial centre of the expanding member. Alternatively, the expanding member may be engaged by a plurality of assembly screws.

Preferably, the spring is provided at its other end with means for receiving or engaging the equipment to be supported, said means being attached to the other end of the spring by an assembly of an assembly screw, elastomeric expanding insert, and expanding member, of the same general construction as used at the lower end of the spring. However, at the equipment supporting end of the spring, the assembly screw may be of larger diameter than the assembly screw used at the lower end of the spring, and internally threaded so as to provide means for fixing thereto the equipment to be supported.

In order to make the invention clearly understood, reference will now be made to the accompanying drawings which are given by way of example and in which:

Fig 1 is an elevational view, partly in section, showing a vibration/noise isolating device of the invention;

Fig 2 is a sectional view to a larger scale than Fig 1, showing the lower region of the isolating device of Fig 1, with an expanding device in an untightened condition;

Fig 3 is a view similar to Fig 2, showing the expanding device in its tightened position, with the lower convolution of the spring securely locked; and

Fig 4 is a view showing a further embodiment of a vibration/noise isolating device of the invention.

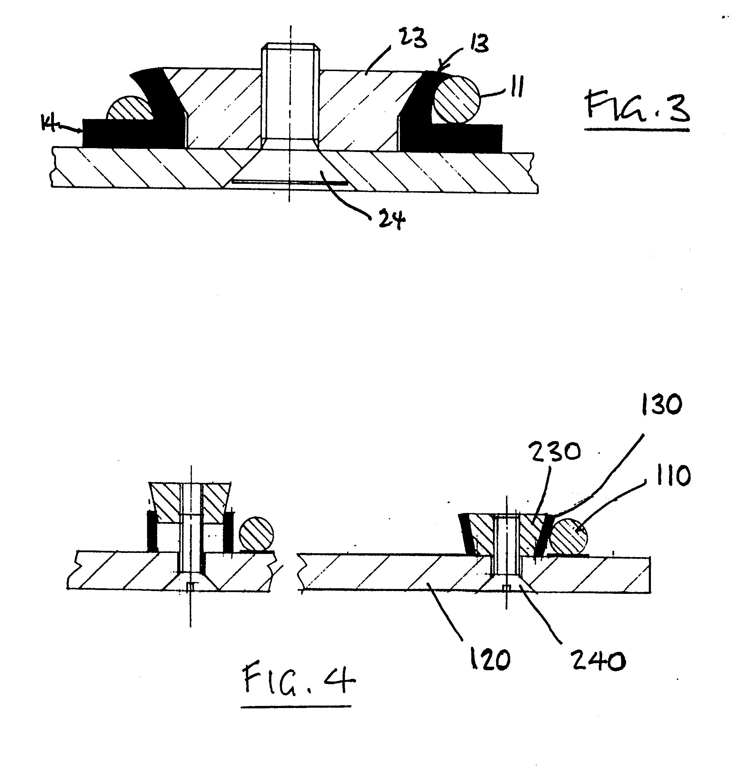

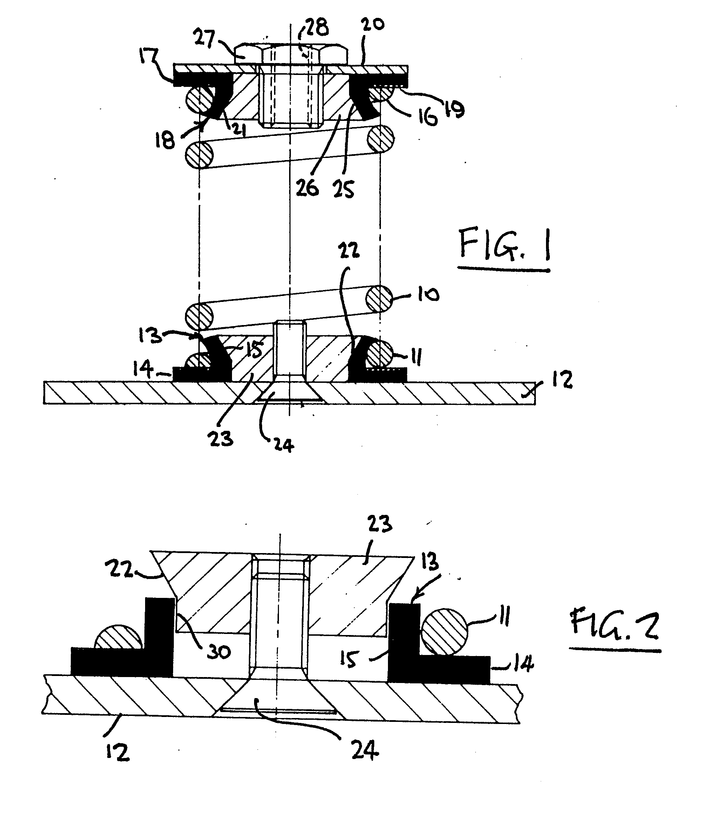

Referring to Fig 1, there is shown a vibration/noise isolating device comprising a helical steel spring (10) the lower convolution (11) of which is locked to a seating plate (12) by means of an elastomeric insert (13) which has a flange-like portion (14) seated against the seating plate (12) and a tubular portion (15) disposed at the interior of the spring. At its upper end, an endmost convolution (16) of the spring is seated against a flangelike portion (17) of an elastomeric insert (18), with the optional inter-position of a steel washer (19). The flange (17) is seated against an upper steel washer (20). The elastomeric insert (18) engages the upper endmost convolution (16) of the spring by way of a tubular portion (21).

At the lower end of the spring, the tubular portion (15) of the elastomeric insert is held in retaining engagement with the lower convolution (11) of the spring by virtue of a generally conical surface (22) of a metal or plastics expanding device (23). The expanding device (23) is axially internally threaded and is engaged by an assembly screw (24) which extends into a bore of the expanding device (23) from the side of the seating plate (12) remote from the spring.

At the upper end of the spring, the tubular portion (21) of the elastomeric insert (18) is held in its illustrated spring-retaining position by means of a generally conical surface (25) of an expanding device (26) which is generally similar to the expanding device (23) used in the lower end of the spring. The expanding device (26) is held in its illustrated position by way of a fixing screw (27) which extends into the bore of the expanding device (26) from the side of the washer (20) remote from the spring. The fixing screw (27) is internally threaded at (28) so as to provide means for the fixed connection therewith of equipment to be supported.

Referring now to Fig 2, the elastomeric insert (18) is shown in its condition before the tubular portion (15) is radially expanded by means of the expanding device (23). It will be seen that in addition to the conical surface (22) of the expanding device (23), there is a generally cylindrical region (30) which in effect provides a centralised lead-in to the conical region (22). On assembly of the vibration/noise isolating device the assembly screw (24) is tightened so as to draw the expanding device (23) down towards and against the seating plate (12), thus causing expansion of the elastomeric insert into the condition illustrated in Fig 3. A steel washer may be interposed between the lower convolution (11) of the spring and the flange (14) of the elastomeric insert (13).

Similar expansion of the elastomeric insert (18)

**0 264 276**

takes place at the upper end of the spring, on appropriate tightening of the fixing screw (27).

Of course, depending on the nature of the equipment or structure to be supported in a substantially vibration/noise isolated manner, a plurality of the above-described isolating devices would normally be used as a group.

Instead of there being a single expanding device for retaining the lower end of the spring, there may be a plurality of such devices. This is illustrated in Fig 4. In that embodiment, the isolating device comprises a helical steel spring the lower convolution (110) of which is locked to a seating plate (120) by means of a plurality of elastomeric inserts (130). Normally there will be three or more such inserts although only two are shown in Fig 4. The inserts (130) are expanded into retaining engagement with the spring convolution (110) by the action of expanding devices (230) actuated by assembly screws (240), the action of the assembly screws and expanding devices being the same as already described for the embodiment of Figs 1, 2 and 3.

**Claims**

1. A vibration and/or noise isolating device comprising a helical spring provided at one (generally upper) end with means for engaging or receiving a member to be supported in a substantially vibration/noise isolated manner, the spring being mounted at its other (generally lower) end by way of an elastomeric expanding insert which engages at least part of an endmost convolution of the spring generally radially from the interior of the spring, the elastomeric insert being expanded into retaining engagement with the spring by means of a metal or plastics expanding member disposed concentrically with the expanding insert and shaped at its periphery in such a manner as to impart an expanding force to the insert when moved axially towards the support platform on tightening of an assembly screw which is in screw-threaded engagement with a bore of the expanding member, the assembly screw extending into the expanding member from the side of the mounting member remote from said endmost convolution.

2. An isolating device as claimed in claim 1, wherein the bore is at the axial centre of the expanding member.

3. An isolating device as claimed in claim 1, wherein the expanding member is engaged by a plurality of assembly screws.

4. An isolating device as claimed in claim 1, wherein the spring is provided at its other end with means for receiving or engaging the equipment to be supported, said means being attached to the other end of the spring by an assembly of an assembly screw, elastomeric expanding insert, and expanding member, of the same general construction as used at the lower end of the spring.

5. An isolating device as claimed in claim 4, wherein at the equipment supporting end of the spring, the assembly screw is of larger diameter than the assembly screw used at the lower end of the spring, and internally threaded so as to provide means for fixing thereto the equipment to be supported.

6. An isolating device as claimed in claim 1, wherein a plurality of said elastomeric expanding inserts are provided by which the spring is mounted at its said other end, the expanding inserts each engaging a part of said endmost convolution, the inserts of the said plurality being angularly spaced around the said endmost convolution so as to provide support for the said convolution at a corresponding plurality of regions, each of said elastomeric inserts being expanded by means of a corresponding metal or plastics expanding member.

0264276

FIG. 3

FIG. 4

0264276

FIG. 1

FIG. 2